# FASCICULE DE BREVET EUROPEEN

(11) **EP 1 034 517 B1**
(45) Date de publication et mention de la délivrance du brevet: **19.09.2001**
(21) Numéro de dépôt: 98958278.8
(22) Date de dépôt: 24.11.1998
(51) Int. Cl.: G07F 7/08

(54) **PROCEDE DE GESTION DES DONNEES DANS UNE CARTE A PUCE**
DATENVERWALTUNGSVERFAHREN IN EINER CHIPKARTE
METHOD FOR MANAGING DATA IN A SMART CARD

(30) Priorité: 25.11.1997 FR 9714802
(43) Date de publication de la demande: 13.09.2000
(73) Titulaire: GEMPLUS, 13881 Gémenos Cédex (FR)
(72) Inventeur: LISIMAQUE, Gilles, Potomac, MD 20854 (US)
(86) Numéro de dépôt international: FR9802510
(87) Numéro de publication internationale: WO9927504

(56) Documents cités:
- EP-A- 0 224 147
- EP-A- 0 426 541
- EP-A- 0 671 712
- WO-A-94/16415

## Description

La présente invention a pour objet un procédé de gestion de données mémorisées dans une mémoire d'une carte à puce. L'invention concerne le transfert des informations d'une carte à une autre, notamment dans le cas où la carte de départ est sur le point d'être périmée et nécessite d'être remplacée par une carte à durée prorogée et possédant par ailleurs des mêmes facultés de système, des mêmes informations enregistrées dans le circuit électronique.

On connaît ainsi par exemple dans le domaine des cartes à puces, ou plus généralement des objets portables à puce électronique, les porte-monnaie électroniques. Dans de telles utilisations, des unités monétaires stockées dans la mémoire d'une carte à puce sont transférées dans une autre et sont retirées de la première. Il n'y a pas, a priori, de limite de validité. On connaît par ailleurs dans le domaine bancaire des cartes à puce dont le corps de carte comporte un embossage indiquant en clair la date limite de validité de la carte. Cette précaution de limite de validité a deux intérêts. D'une part, elle permet de tenir compte du vieillissement des circuits électroniques et d'en favoriser le remplacement. D'autre part, elle provoque le retour à l'autorité de tutelle des cartes mises en circulation de façon à ce que cette autorité puisse globalement contrôler les moyens de transactions qu'elle met à disposition.

Avec le développement exponentiel des applications contrôlées par des utilisations de carte à puce, le remplacement des cartes à puce périmées ne pourra plus nécessairement être effectué par une autorité de tutelle: il devra pouvoir être effectué sur site, au besoin avec des lecteurs enregistreurs de cartes à puce communs.

Les principes d'utilisation des cartes à puce comportent la nécessité de composer un code secret, ou code personnel d'identification (PIN), et la comparaison de ce code à un code mémorisé dans la mémoire de la puce. En cas de succès de la comparaison, l'application, c'est-à-dire en pratique la délivrance d'un bien ou d'un service correspondant à la transaction, ou même un paiement, peut être effectuée avec la carte. Dans le cas contraire, le porteur est renvoyé à une situation de rejet. Cette comparaison est mise en oeuvre d'une manière sécurisée.

Le problème qui se pose lorsqu'on veut transférer des informations d'une carte dans une autre est un problème de gestion de ces codes secrets ou, plus généralement, des codes de gestion qui permettent la gestion sous contrôle des données mémorisées dans la mémoire des cartes. En effet, ces codes, mémorisés sous une forme ou sous une autre dans la mémoire de la puce de la carte, sont produits par l'autorité de tutelle en fonction de données propres à une identification de la carte et propres à cette autorité. De ce fait, il devient impossible d'organiser une prorogation automatique de la validité des cartes par remplacement des cartes périmées par des cartes à durées plus longues sans l'intervention de cette autorité. En effet, une telle démarche reviendrait à mettre à la disposition de tous les organismes, ou même de tous les lecteurs aptes à assurer cette prorogation, tous les secrets concernant l'élaboration des codes secrets et propres à cette autorité.

L'invention a néanmoins pour objet de remédier à ce problème futur en instituant un protocole d'enregistrement des codes de gestion. Le protocole tient compte des anciens codes de gestion, ou au minimum d'informations relatives aux anciennes cartes dont proviennent les données qu'on va enregistrer dans la nouvelle.

Selon l'invention, on utilise un algorithme de cryptage, pour produire un nouveau code de gestion, qui prend en compte, d'une part, une information d'identification de la nouvelle carte et, d'autre part, une information relative à l'ancienne carte. Dans un cas particulier les informations relatives à l'ancienne carte seront les informations d'identification de l'ancienne carte. Dans un autre cas, ce sera le code de gestion de l'ancienne carte lui-même qui sera utilisé. Toute autre information relative à l'ancienne carte est utilisable.

Au moment de l'utilisation, on peut alors demander à l'utilisateur de composer un code secret qui correspond au code de gestion de la deuxième carte. Dans certains cas de vérification particulière, on pourra lui demander de composer en plus, en une deuxième étape ou une première étape, un code secret correspondant au code de gestion de la première carte afin de vérifier la cohérence de l'élaboration du deuxième code de gestion.

L'invention a donc pour objet un procédé de gestion de données mémorisées dans une première mémoire d'une première puce d'une première carte à puce dans lequel
- on produit un premier code de gestion, avec un premier algorithme de cryptage, à partir d'une clé mère et d'une première information d'identification de la première carte à puce,
- on enregistre ce premier code de gestion dans la première mémoire,
- on met la première carte en relation avec un lecteur de carte à puce,
- on autorise une édition de données mémorisées dans la première mémoire si un code présenté dans le lecteur est compatible avec le premier code de gestion enregistré,
caractérisé en ce que
- on produit un deuxième code de gestion, avec un deuxième algorithme de cryptage, à partir d'une information relative à la première carte et d'une deuxième information d'identification d'une deuxième carte à puce,
- on enregistre cette information relative à la première carte et ce deuxième code de gestion dans une deuxième mémoire d'une deuxième puce de la deuxième carte à puce
- on autorise l'édition de données mémorisées dans la deuxième mémoire si un code secret présenté par le lecteur est compatible avec le deuxième code de gestion enregistré.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- Figure 1: Une représentation schématique d'un dispositif utilisable pour mettre en oeuvre le procédé de l'invention;
- Figure 2: Les étapes essentielles de la mise en oeuvre du procédé de l'invention;
- Figure 3: Le mode préféré de vérification de la légalité de la détention d'une carte à puce par un porteur;
- Figure 4: La représentation schématique d'un algorithme de type symétrique permettant de retrouver un code de gestion à partir d'un précédent code de gestion.

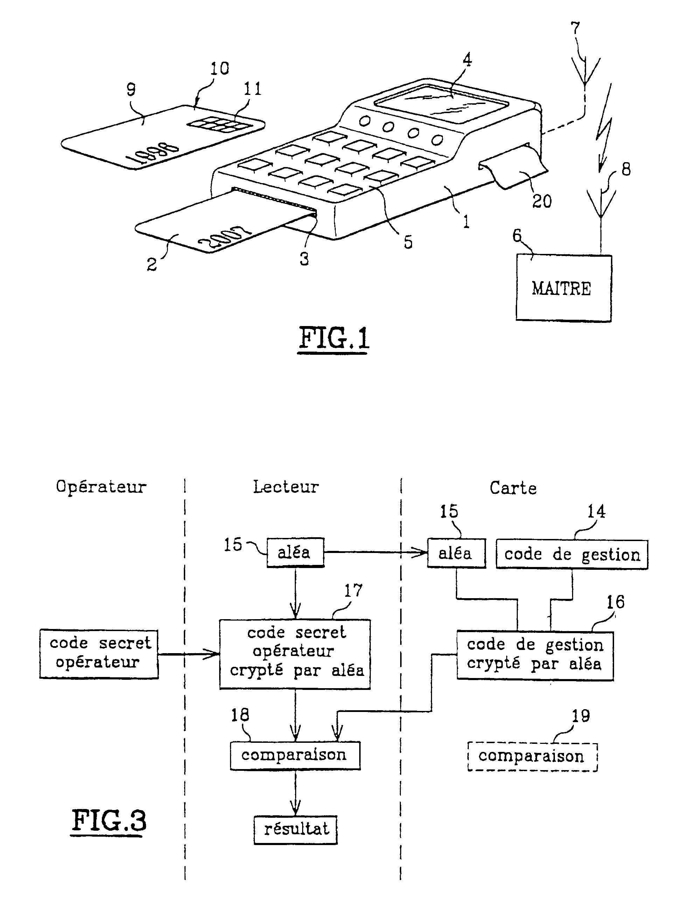

La figure 1 montre un dispositif utilisable pour mettre en oeuvre le procédé de gestion de données de l'invention. Cette figure montre un lecteur 1 pour lire un objet 2 portable à puce, ou une carte à puce, introduit dans une fente 3 du lecteur. Ce lecteur comporte d'une manière conventionnelle un écran 4 pour visualiser des messages édités par le lecteur et un clavier 5 pour permettre à un opérateur, le porteur de la carte, d'organiser une transaction entre le lecteur 1 et la carte à puce 2. Dans un exemple, le lecteur peut être relié par divers moyens à un système maître 6, soit en temps réel, soit en temps différé. Dans un exemple, ces moyens peuvent comporter une liaison hertzienne par l'intermédiaire de deux antennes 7 et 8, et leur système d'émission réception associé, reliés au lecteur et au système maître respectivement.

L'invention concerne plus particulièrement le transfert d'informations contenues dans une carte à puce 9 périmée (sa date de péremption étant par exemple 1996, déjà passée) et une carte à puce nouvelle 2 avec une date de validité bien supérieure (2007). La carte 9 ainsi que la carte 2 comportent chacune une puce électronique telle que référencée 10 et des moyens de mise en relation avec le lecteur 1. Dans un exemple, ces moyens de mise en relation sont tout simplement un connecteur 11. D'autres solutions de mise en relation sont connues.

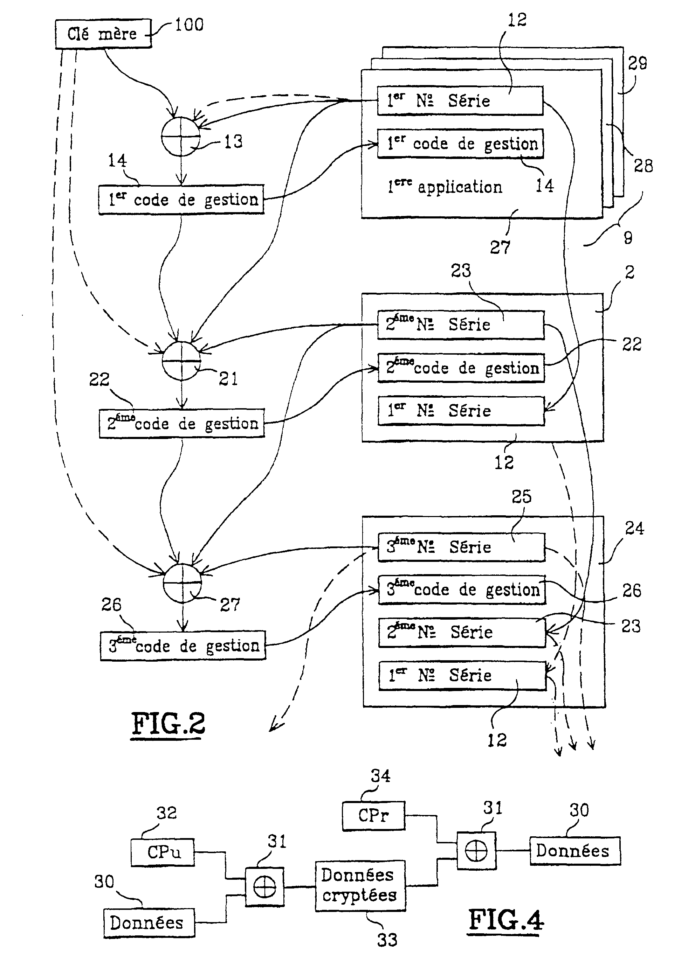

Sur la figure 2, on a montré d'une manière plus détaillée les étapes du procédé de l'invention. On y a également représenté les cartes à puce 9 ancienne et 2 nouvelle. La carte à puce est munie, enregistrée dans une mémoire de la puce, d'une information 12 représentative d'un numéro de série de la carte ou de la puce. Dans une application bancaire, ce numéro de série peut également être ou correspondre à un numéro de compte en banque.

Le principe de l'élaboration d'un code de gestion consiste à utiliser une clé mère 100. Une clé mère est ainsi une chaîne de caractères binaires: dans un exemple, une clé mère a une longueur de 1024 bits. Le numéro de série de la carte ou de la puce peut également être présenté sous une forme binaire. Les deux chaînes de caractères binaires correspondantes sont alors présentées à un algorithme de cryptage représenté symboliquement par la référence 13. L'algorithme 13 de cryptage a pour résultat la production d'un premier code de gestion. Dans un exemple, l'algorithme 13 de cryptage est mis en oeuvre par le système maître, disponible chez un émetteur de la carte, avant que cet émetteur ne décide d'envoyer la carte à puce à son utilisateur. Au cours d'une opération dite de personnalisation, l'émetteur, avec un lecteur de carte à puce spécial, lit le numéro de série de la carte et produit, avec un algorithme 13 et une clé mère 100 connue de l'émetteur seul, un premier code 14 de gestion. Le système maître enregistre -le premier code 14 de gestion dans la mémoire de la puce de la carte. D'une manière connue, cet enregistrement peut être effectué à un emplacement de la puce de la carte 9. Cet emplacement peut aussi dépendre pour sa localisation de l'application, première application 27, gérable avec la carte. De préférence, les codes de gestion sont donc secrets et mémorisés dans des emplacements inviolables.

La figure 3 montre, un mode d'utilisation préféré d'une carte à puce ou d'un objet portable à puce muni pour une application d'un tel code de gestion 14. Au moment où un opérateur, un utilisateur, glisse sa carte à puce dans le lecteur 1, celui-ci produit, un aléa 15, un chaîne aléatoire de bits. Cet aléa 15 est envoyé, notamment par l'intermédiaire du connecteur 11, à la puce de la carte 9. Celle-ci met alors en oeuvre un cryptage de l'aléa 15 par le code de gestion 14 et produit un code 16 de gestion crypté par l'aléa. Dans le même temps, l'opérateur compose sur le clavier 5 un code secret. Ce code secret est envoyé au lecteur 1. Le lecteur 1 effectue, de la même façon que la carte 9, le cryptage 17 du code secret par la valeur de l'aléa 15 que ce lecteur connaît. Un circuit de comparaison 18 du lecteur, à moins que cela ne soit un circuit de comparaison 19 de la carte, effectue la comparaison du code 16 de gestion crypté par l'aléa au code secret 17 crypté par l'aléa. S'il y a identité le résultat du circuit de comparaison 18 ou 19 sera positif et la suite de la transaction envisagée avec la carte 9 pourra se poursuivre.

Notamment, cette suite de transactions comportera l'édition de données mémorisées dans la première mémoire de la première carte 9 si le code secret présenté au lecteur est compatible avec le premier code 14 de gestion enregistré.

En effet, le lecteur produira souvent, d'une part, un ticket 20 représentatif de la transaction ou, d'autre part, d'une manière non visible, un enregistrement dans sa mémoire représentatif de cette transaction. Cet enregistrement est lui-même destiné à être transmis au système maître en mode différé ou en temps réel. Le ticket 20 ainsi que l'enregistrement comporteront des indications de la transaction, notamment au moins une partie d'identification de la carte à puce 2, par exemple le numéro de série 12 envisagé jusqu'ici, ou un numéro de compte ou toute autre information enregistrée dans la carte 9. Le seul fait que ces informations apparaissent sur le ticket 20, ou sur l'enregistrement du lecteur 1, signifie qu'elles ont par ailleurs été éditées. Dans la pratique, on cherche en fait avec la comparaison à bloquer ou à permettre une telle édition et donc la suite de la transaction.

Dans l'invention, on a considéré qu'on avait affaire à une carte 9 et qu'on voulait passer le contenu de la puce 10 de cette carte 9 dans une puce d'une nouvelle carte 2. Selon l'invention, on produit avec un algorithme 21, à partir d'une information relative à la carte 9 et d'une information d'identification de la deuxième carte 2 un deuxième code de gestion 22.

Dans un exemple particulier, l'information relative à la première carte est justement le numéro de série 12 et l'information relative à la deuxième carte 9 est également un numéro de série 23 de cette deuxième carte. Néanmoins, on aurait pu utiliser comme information relative à la première carte le premier code de gestion 14, ou toute autre information.

Dans l'invention, la mise en oeuvre de l'algorithme 21 est effectuée par un lecteur 1 de type commun, mais muni d'un logiciel pour, au cours d'une cession de production du code 22, provoquer la lecture dans la carte 9 des informations utiles, demander l'extraction de la carte 9 et la mise en place de la carte 2 en remplacement, lire les données d'identification utiles dans la carte 2, calculer le code 22 et l'enregistrer dans la carte 2. Pour simplifier cette production des codes de gestion, le logiciel de mise en oeuvre de l'algorithme peut être, au moins en partie, mémorisé dans la carte 9 (ou et dans la carte 2). La mise en oeuvre peut même être effectuée par le micro-processeur de la carte pour plus de sécurité.

Pour simplifier l'explication on a considéré que l'algorithme 21 nécessitait la réception de trois chaînes de caractères. L'algorithme 13 recevra de préférence le premier numéro de série 12, une deuxième fois le premier numéro de série 12 ainsi que la clé mère 100. Dans un exemple, l'algorithme 21 est le même que l'algorithme 13. Pour l'algorithme 21 les trois informations utiles peuvent être le numéro de série 23, le numéro de série 12 et la clé mère 100. Cette clé 100 peut même être remplacée par le code 14. On produit donc bien selon l'invention un deuxième code de gestion 22 avec le deuxième algorithme de cryptage 21. Le deuxième code de gestion 22 ainsi produit est alors enregistré dans la deuxième carte 2 en même temps que l'information relative à la première carte (12 ou 14) qui a servi à l'élaboration de ce deuxième code de gestion. Dans l'exemple, le numéro de série 12 de la première carte 9 est également enregistré dans la deuxième carte 2.

La figure 2 montre encore que le mécanisme peut se prolonger à partir du moment où on utilisera une troisième carte à puce 24 munie d'un troisième numéro de série 25. On pourra alors, avec cette troisième carte 24, produire un troisième code de gestion 26 dans les mêmes conditions avec un algorithme 27 semblable à l'algorithme 21. Dans ce cas, on stockera dans la mémoire de la troisième carte 24 les informations relatives à la deuxième carte 2: le numéro de série 23. Cependant, on peut vouloir également stocker dans la troisième carte 24 l'information relative à la première carte 9, c'est-à-dire le numéro de série 12.

On a représenté pour la carte 9 une première application 27. Cette application est une première façon d'utiliser la carte 9. Cette carte 9 peut être, de préférence selon l'invention, une carte multi-applications. Dans ce cas, le code de gestion 14 est un code de gestion destiné à une application. Pour des autres applications 28 ou 29, on retrouvera les mêmes éléments. Cependant, autant on peut utiliser un même numéro de série 12 (commun à toute la carte ou à toute la puce), autant les autres codes de gestion auront intérêt à être différents. Ceci peut être facilement obtenu en utilisant des algorithmes 13 paramétrés par des clés mères 100 différentes, dépendantes des applications concernées. La clé mère 100 peut par ailleurs être stockée dans la carte 9 à l'endroit de la zone mémoire dévolue à l'application 27, 28 ou 29. L'algorithme 13 est alors paramètré par une clé 100 qui dépend de l'application.

Au moment de la reconnaissance de ce que le porteur de la carte 2 est un bon porteur, le lecteur 1 et la carte à puce 2 échangent des informations conformément à la figure 2. Dans ce cas cependant, le code de gestion concerné est maintenant sera le code -22 relatif à la deuxième carte et non plus le code 14 relatif à la première. L'opérateur doit donc composer un code secret correspondant au code 22.

Il est possible selon l'invention de vérifier que la deuxième carte 2 est une héritière légitime du contenu de la première carte 9. Cette vérification peut être entreprise à la demande, en faisant exécuter par le lecteur 1, ou alternativement par la carte à puce 2, des opérations de cryptage correspondant, d'une part, à l'algorithme 13 et, d'autre part, aux algorithmes 16 et 17. L'opérateur doit donc composer un code secret correspondant au code 22. Autrement dit, à partir du premier numéro de série 14 disponible dans la deuxième carte 2, il est possible, conformément aux indications données pour le haut de la figure 2, de retrouver le premier code de gestion 14. Puis, nanti de ce code de gestion 14, la carte 2 peut mettre en oeuvre l'algorithme 16 à partir de l'aléa. Dans ce cas, on peut demander au porteur de composer, non pas le nouveau code secret, mais l'ancien code secret. Dans un exemple la demande de réalisation de cette vérification plus complexe pourra être aléatoirement demandée, par exemple une fois sur cent en moyenne. Evidemment, en cas d'échec de la vérification les mêmes conséquences sur le déroulement de la suite de la transaction seront entraînées.

L'algorithme 21 sera de préférence différent de l'algorithme 13, encore qu'il pourrait être le même. S'il est différent, l'algorithme 21 sera de préférence un algorithme dit symétrique. Un algorithme symétrique 31 est montré sur la figure 4. La particularité d'un algorithme symétrique est d'utiliser des clés publiques CPu appariées à des clés privées CPr. Le caractère symétrique de l'algorithme 31 résulte ensuite dans le fait que des données 30 chiffrées dans l'algorithme 31 symétrique par la clé mère 32 produisent des données cryptées 33. Si ces données 33 sont elles-mêmes cryptées par le même algorithme 31 paramètré, ensuite par la clé fille 34, alors la deuxième mise en oeuvre de l'algorithme 31 produit les données 30 de départ. Dans un exemple, pour une même clé publique mère CPu on peut avoir beaucoup de clés privées filles CPr différentes. La diversification des clés fait intervenir le numéro de série des cartes, de sorte que chaque carte possède une clé, un code de gestion 14 différent. On voit que, si l'algorithme 13 ou l'algorithme 21 sont des algorithmes symétriques, et si on remplace les données 30 par le numéro de série 12, alors on obtient à titre de données cryptées la clé fille 34 elle-même.

Selon l'invention, on associe en plus aux données mémorisées dans la mémoire de la carte 9 un attribut de transmission. Et on autorise l'édition de ces données, notamment en vue de leur copie dans la deuxième mémoire, en fonction de la valeur de cet attribut. Lorsque c'est le cas, on copie ces données dans la deuxième carte à puce 2 en même temps que cet attribut. En pratique, cet attribut renseigne sur une nécessité de produire un deuxième code de gestion ou non au moment de la copie. Dans certains cas, le mécanisme mis en oeuvre par les algorithme 13 et 21 sera rendu nécessaire, dans d'autres cas il ne sera pas exécuté.

Dans un autre cas, l'attribut de transmission renseigne sur la nécessité du contrôle de la copie par le système maître. Dans ce cas, au moment où on édite les données à copier, on lit l'attribut qui les concerne. Si l'intervention du système maître est requise une connexion au système maître 6 est entreprise. Cette copie peut avoir lieu ensuite en temps réel ou en temps différé avec ou non transmission des données au système maître.

## Revendications

1. Procédé de gestion de données mémorisées dans une première mémoire d'une première puce (10) d'une première carte (9) à puce dans lequel
- on produit (13) un premier code (14) de gestion, avec un premier (13) algorithme de cryptage, à partir d'une clé mère (100) et d'une première information (12) d'identification de la première carte à puce,
- on enregistre ce premier code de gestion dans la première mémoire,
- on met la première carte en relation avec un lecteur (1) de carte à puce,
- on autorise une édition (20) de données mémorisées dans la première mémoire si un code secret présenté dans le lecteur est compatible (18,19) avec le premier code de gestion enregistré,
**caractérisé en ce que**
- on produit (21) un deuxième code (22) de gestion, avec un deuxième algorithme (21) de cryptage, à partir d'une information (12) relative à la première carte et d'une deuxième (23) information d'identification d'une deuxième carte à puce,
- on enregistre cette information (12) relative à la première carte et ce deuxième code (22) de gestion dans une deuxième mémoire d'une deuxième puce de la deuxième carte (2) à puce
- on autorise l'édition de données mémorisées dans la deuxième mémoire si un code secret présenté dans le lecteur est compatible avec le deuxième code de gestion enregistré.

2. Procédé selon la revendication 1, **caractérisé en ce que**
- les premiers et deuxièmes codes de gestion sont des codes secrets.

3. Procédé selon l'une des revendications 1 ou 2,
**caractérisé en ce que**
- le deuxième algorithme est mis en oeuvre dans la puce de la carte.

4. Procédé selon l'une des revendications 1 à 3,
**caractérisé en ce que**
- le premier algorithme de cryptage est différent du deuxième algorithme de cryptage, et en ce que
- le deuxième algorithme de cryptage est symétrique (31).

5. Procédé selon l'une des revendications 1 à 3,
**caractérisé en ce que**
- le premier algorithme de cryptage est le même que le deuxième algorithme de cryptage.

6. Procédé selon l'une des revendications 1 à 5,
**caractérisé en ce que**
- l'information relative à la première carte est la première information d'identification de la première carte ou de la première puce.

7. Procédé selon l'une des revendications 1 à 6,
**caractérisé en ce que**
- l'information relative à la première carte est le premier code de gestion de la première carte ou de la première puce.

8. Procédé selon l'une des revendications 1 à 7,
**caractérisé en ce que**
- on produit, par exemple, dans le lecteur (1) un mot code de gestion sur la base de l'information relative à la première carte et
- on vérifie que la carte est authentique si ce deuxième mot code de gestion est compatible avec un mot secret.

9. Procédé selon l'une des revendications 1 à 8,
**caractérisé en ce que**
- on associe aux données mémorisées dans la première mémoire un attribut de transmission,
- on autorise l'édition de ces données, en vue de leur copie dans la deuxième mémoire, en fonction de la valeur de cet attribut,
- on copie ces données et cet attribut dans la deuxième mémoire,
- cet attribut renseigne sur une nécessité de produire un deuxième code secret au moment de la copie.

10. Procédé selon la revendication 9, **caractérisé en ce que**, pour n'autoriser l'édition des données contenues dans la première mémoire que sous le contrôle d'un système maître,
- on associe un attribut de transmission qui renseigne sur une nécessité de ce contrôle par un système maître,
- on lit cet attribut préalablement à l'édition,
- et on lance un programme d'édition si -l'attribut lu le permet.

11. Procédé selon l'une des revendications 9 à 10,
**caractérisé en ce que**
- l'attribut de transmission interdit l'édition en vue de la copie des données concernées.

12. Procédé selon l'une des revendications 9 à 11,
**caractérisé en ce que**
- on copie en différé les informations dans la deuxième mémoire.

13. Procédé selon l'une des revendications 1 à 12, **caractérisé en ce que**
- la carte est une carte multi-applications (27-29), les données étant associées à des codes de gestion respectifs.

## Patentansprüche

1. Verwaltungsverfahren von in einem ersten Speicher eines ersten Chips (10) einer ersten Chipkarte (9) gespeicherten Daten, bei dem
- man einen ersten Verwaltungscode (14) erzeugt (13), mit einem ersten Verschlüsselungsalgorithmus (13), ab einem Mutterschlüssel (100) und einer ersten Identifizierungsinformation (12) der ersten Chipkarte,
- man diesen ersten Verwaltungscode im ersten Speicher aufzeichnet,
- man die erste Karte mit einem. Chipkartenlesegerät (1) in Verbindung setzt,
- man eine Edition (20) von im ersten Speicher gespeicherten Daten genehmigt, wenn ein in das Lesegerät eingegebener Code mit dem ersten aufgezeichneten Verwaltungscode kompatibel (8, 19) ist,
**dadurch gekennzeichnet, dass**
- man einen zweiten Verwaltungscode (22) erzeugt (21), mit einem zweiten Verschlüsselungsalgorithmus (21), ab einer Information (12) bezüglich der ersten Karte und einer zweiten Identifizierungsinformation (23) einer zweiten Chipkarte,
- man diese Information (12) bezüglich der ersten Karte und diesen zweiten Verwaltungscode (22) in einem zweiten Speicher eines zweiten Chips der zweiten Chipkarte (2) aufzeichnet,
- man die Edition von im zweiten Speicher gespeicherten Daten genehmigt, wenn ein dem Lesegerät angegebener Geheimcode mit dem zweiten aufgezeichneten Verwaltungscode kompatibel ist.

2. Verfahren nach Anspruch 1, **dadurch gekennzeichnet, dass** der erste und zweite Verwaltungscode Geheimcodes sind.

3. Verfahren nach einem der Ansprüche 1 oder 2, **dadurch gekennzeichnet, dass** der zweite Algorithmus im Chip der Karte umgesetzt wird.

4. Verfahren nach einem der Ansprüche 1 bis 3, **dadurch gekennzeichnet, dass** sich der erste Verschlüsselungs-algorithmus vom zweiten Verschlüsselungsalgorithmus unterscheidet, und dass der zweite Verschlüsselungsalgorithmus symmetrisch (31) ist.

5. Verfahren nach einem der Ansprüche 1 bis 3, **dadurch gekennzeichnet, dass** der erste Verschlüsselungsalgorithmus gleichzeitig der zweite Verschlüsselungsalgorithmus ist.

6. Verfahren nach einem der Ansprüche 1 bis 5, **dadurch gekennzeichnet, dass** die Information bezüglich der ersten Karte die erste Identifizierungsinformation der ersten Karte oder des ersten Chips ist.

7. Verfahren nach einem der Ansprüche 1 bis 6, **dadurch gekennzeichnet, dass** die Information bezüglich der ersten Karte der erste Verwaltungscode der ersten Karte oder des ersten Chips ist.

8. Verfahren nach einem der Ansprüche 1 bis 7, **dadurch gekennzeichnet, dass** man beispielsweise im Lesegerät (1) ein Verwaltungscodewort auf der Basis der Information bezüglich der ersten Karte erzeugt, und dass man prüft, ob die Karte authentisch ist, wenn dieses zweite Verwaltungscodewort mit einem Geheimwort kompatibel ist.

9. Verfahren nach einem der Ansprüche 1 bis 8, **dadurch gekennzeichnet, dass** man den im ersten Speicher gespeicherten Daten ein Übertragungsattribut zuordnet, dass man die Edition dieser Daten genehmigt, um entsprechend dem Wert dieses Attributs in den zweiten Speicher kopiert zu werden, dass man diese Daten und dieses Attribut in den zweiten Speicher kopiert, wobei dieses Attribut über eine Notwendigkeit Auskunft gibt, zum Zeitpunkt des Kopieren einen zweiten Geheimcode zu erzeugen.

10. Verfahren nach Anspruch 9, **dadurch gekennzeichnet, dass** man, um die Edition der im zweiten Speicher enthaltenen Daten nur unter der Kontrolle eines Master-Systems zu genehmigen, ein Übertragungsattribut zuordnet, das über eine Notwendigkeit dieser Kontrolle durch ein Master-System Auskunft gibt, dass man dieses Attribut vor der Edition liest, und dass man ein Editionsprogramm startet, wenn das gelesene Attribut dies gestattet.

11. Verfahren nach einem der Ansprüche 9 bis 10, **dadurch gekennzeichnet, dass** das Übertragungsattribut die Edition zum Kopieren der betroffenen Daten untersagt.

12. Verfahren nach einem der Ansprüche 9 bis 11, **dadurch gekennzeichnet, dass** man die Informationen verzögert in den zweiten Speicher kopiert.

13. Verfahren nach einem der Ansprüche 1 bis 12, **dadurch gekennzeichnet, dass** die Karte eine Multiapplikationskarte (27-29) ist, wobei die Daten jeweiligen Verwaltungscodes zugeordnet sind.

## Claims

1. A method of managing data stored in a first memory of a first chip (10) in a first smart card (9) in which
- a first management code (14) is produced (13), with a first enciphering algorithm (13), from a parent key (100) and a first item of identification information (12) for the first smart card,
- this first management code is recorded in the first memory,
- the first card is connected up with a smart card reader (1),
- an editing (20) of data stored in the first memory is enabled if a code presented in the reader is compatible (18, 19) with the first recorded management code,
**characterised in that**
- a second management code (22) is produced (21), with a second encoding algorithm (21), from an item of information (12) relating to the first card and a second item of identification information (23) for a second smart card,
- this information (12) relating to the first card and this second management code (22) are recorded in a second memory of a second chip in the second smart card (2),
- the editing of data stored in the second memory is enabled if a secret code presented by the reader is compatible with the second recorded management code.

2. A method according to Claim 1, **characterised in that**
- the first and second management codes are secret codes.

3. A method according to one of Claims 1 or 2, **characterised in that**
- the second algorithm is implemented in the card chip.

4. A method according to one of Claims 1 to 3, **characterised in that**
- the first enciphering algorithm is different from the second enciphering algorithm, and in that
- the second enciphering algorithm is symmetrical (31).

5. A method according to one of Claims 1 to 3, **characterised in that**
- the first enciphering algorithm is the same as the second enciphering algorithm.

6. A method according to one of Claims 1 to 5, **characterised in that**
- the information relating to the first card is the first identification information for the first card or the first chip.

7. A method according to one of Claims 1 to 6, **characterised in that**
- the information relating to the first card is the first management code for the first card or for the first chip.

8. A method according to one of Claims 1 to 7, **characterised in that**
- a management code word is produced, for example, in the reader (1) on the basis of the information relating to the first card, and
- it is checked that the card is authentic if this second management code word is compatible with a secret word.

9. A method according to one of Claims 1 to 8, **characterised in that**
- a transmission attribute is associated with the data stored in the first memory,
- the editing of these data is enabled, with a view to their copying into the second memory, according to the value of this attribute,
- these data and this attribute are copied into the second memory,
- this attribute gives information about a need to produce a second secret code at the time of copying.

10. A method according to Claim 9, **characterised in that**, to allow the editing of the data contained in the first memory only under the control of a master system,
- a transmission attribute is associated which gives information on a need for this check by a master system,
- this attribute is read prior to the editing,
- and an editing program is initiated if the attribute read so permits.

11. A method according to one of Claims 9 to 10, **characterised in that**
- the transmission attribute inhibits the editing with a view to the copying of the data concerned.

12. A method according to one of Claims 9 to 11, **characterised in that**
- the information is copied in non real time into the second memory.

13. A method according to one of Claims 1 to 12, **characterised in that**
- the card is a multi-application card (27-29), the data being associated with respective management codes.
